# DEMANDE DE BREVET EUROPEEN

(11) **EP 0 947 250 A1**
(43) Date de publication de la demande: **06.10.1999**
(21) Numéro de dépôt: 98201005.0
(22) Date de dépôt: 31.03.1998
(51) Int. Cl.: B02C 13/08, A23L 1/10, A23P 1/14

(54) **Mouture et transport d'un produit alimentaire cuit-extrudé-expansé découpé**

(71) Demandeur: SOCIETE DES PRODUITS NESTLE S.A., 1800 Vevey (CH)
(72) Inventeur: Poncet, Jean-François, 1350 Orbe (CH)
(74) Mandataire: Wavre, Claude-Alain

(57) **Abrégé**

Procédé et appareil de mouture et transport d'un produit alimentaire cuit-extrudé-expansé découpé, dans lesquels on introduit le produit à moudre dans une entrée d'air centrale d'un ventilateur à pales radiales, on le moud sous l'effet de la rotation des pales dans un carénage les enveloppant qui présente la forme générale d'un disque creux, et l'on propulse la poudre ainsi obtenue dans une conduite de transport branchée sur une sortie tangentielle du ventilateur.

## Description

La présente invention a pour objet un procédé de mouture et transport d'un produit alimentaire cuit-extrudé-expansé découpé, un appareil pour sa mise en oeuvre et une installation de cuisson-extrusion, transport et mouture d'un produit alimentaire, comprenant un extrudeur et un tel appareil.

Traditionnellement, un produit alimentaire cuit-extrudé-expansé découpé présentant une relativement faible densité apparente pouvait être recueilli dans un entonnoir placé sous la filière d'un cuiseur-extrudeur, les morceaux de boudins cuits-extrudés-expansés découpés par un couteau tournant contre la filière étant introduits par l'intermédiaire de l'entonnoir dans une entrée en forme de Venturi d'une conduite de transport pneumatique, de l'air étant soufflé dans la conduite par un ventilateur branché sur la conduite en amont de l'entrée en forme de Venturi, et la conduite de transport amenant le produit en morceaux de relativement faible densité apparente à un moulin où il pouvait être réduit en poudre de relativement forte densité apparente, par exemple.

CH568794 décrit un moulin à palettes destiné à moudre grossièrement des grains de maïs fraîchement récoltés, dans lequel deux roues à palettes concentriques tournent en sens contraire, la roue intérieure alimentée axialement propulsant les grains de maïs contre les palettes de la roue extérieure pour les moudre, et la roue extérieure propulsant tangentiellement le maïs moulu dans une conduite menant au sommet d'un silo.

La présente invention a pour but de proposer un procédé, un appareil et une installation qui permettent de préparer et transporter de manière simple et économique des poudres de produit alimentaire cuit-extrudé-expansé.

A cet effet, dans le procédé de mouture et transport d'un produit alimentaire cuit-extrudé-expansé découpé selon la présente invention, on introduit le produit à moudre dans une entrée d'air centrale d'un ventilateur à pales radiales, on le moud sous l'effet de la rotation des pales dans un carénage les enveloppant qui présente la forme générale d'un disque creux, et l'on propulse la poudre ainsi obtenue dans une conduite de transport branchée sur une sortie tangentielle du ventilateur.

De même, l'appareil pour la mise en oeuvre du procédé selon la présente invention comprend une conduite d'amenée d'un produit à moudre branchée sur une entrée centrale d'un ventilateur à pales radiales dans un carénage les enveloppant qui présente la forme générale d'un disque creux, et une conduite de transport branchée sur une sortie tangentielle du ventilateur.

Enfin, la présente installation de cuisson-extrusion, transport et mouture d'un produit alimentaire comprend un extrudeur et un appareil selon la présente invention, la conduite d'amenée du produit à moudre étant reliée à un entonnoir prévu au-dessous de la sortie de la filière de l'extrudeuse et un couteau rotatif étant prévu contre la sortie de la filère, au-dessus de l'entonnoir.

On a constaté avec surprise que le présent procédé permet de simplifier notablement des opérations traditionnelles de transport et mouture d'un produit alimentaire cuit-extrudé-expansé découpé. Il permet en particulier de supprimer avantageusement une étape de mouture suivant une étape de transport d'un produit alimentaire cuit-extrudé-expansé découpé, tout en facilitant l'étape de transport.

De même, l'appareil selon la présente invention permet de simplifier de manière surprenante, efficace et économique une installation traditionnelle de fabrication d'un produit alimentaire en poudre comprenant successivement un extrudeur, un dispositif de transport pneumatique et un moulin, puisqu'il permet de faire l'économie du moulin.

Le présent procédé est particulièrement destiné à la mouture d'un produit alimentaire cuit-extrudé-expansé découpé présentant une densité apparente d'environ 100-200 g/l et à son transport pneumatique sous forme d'une poudre de densité apparente d'environ 400-600 g/l.

Pour obtenir un produit cuit-extrudé-expansé découpé adéquat, on peut préparer un mélange présentant une teneur en eau d'environ 12-22% et comprenant environ 70-90% d'une farine ou semoule de céréale telle que le riz, le maïs ou le blé, environ 5-10% de sucre, jusqu'à 5% de cacao et environ 2-8% de matière grasse, par exemple.

On peut doser ce mélange dans un extrudeur bivis et l'y cuire durant environ 20-40 s sous 80-190 bar à 110-200°C, l'extrusion pouvant se faire au travers d'une filière présentant un ou plusieurs orifices de sortie de 1-5 mm de diamètre, les boudins expansés formés à la sortie de la filière dans l'atmosphère ambiante pouvant présenter un diamètre d'environ 6-12 mm et une teneur en eau résiduelle d'environ 5-12%.

On peut découper le produit expansé obtenu à la sortie de la filière par un couteau rotatif dont les lames glissent contre le ou les orifices de sortie de la filière. On peut obtenir ainsi un produit en morceaux en forme de boulettes expansées de texture poreuse et croustillante présentant une densité apparente d'environ 100-200 g/l, par exemple.

On peut refroidir le produit à température ambiante, par exemple, avant de l'introduire dans une entrée d'air centrale d'un ventilateur à pales radiales.

On le moud alors sous l'effet de la rotation des pales dans un carénage les enveloppant qui présente la forme générale d'un disque creux.

La poudre ainsi obtenue peut présenter une granulométrie relativement bien définie autour d'une valeur moyenne d'environ 250-350 um, par exemple, pour une densité apparente d'environ 400-600 g/l.

On propulse cette poudre dans une conduite de transport branchée sur une sortie tangentielle du ventilateur et on peut la recueillir à une extrémité aval de cette conduite qui peut présenter une longueur d'environ 20-30 m, par exemple.

L'appareil pour la mise en oeuvre du procédé selon la présente invention comprend donc une conduite d'amenée d'un produit à moudre branchée sur une entrée centrale d'un ventilateur à pales radiales dans un carénage les enveloppant qui présente la forme générale d'un disque creux, et une conduite de transport branchée sur une sortie tangentielle du ventilateur.

Traditionnellement, un ventilateur à pales radiales dans un carénage les enveloppant qui présente la forme générale d'un disque creux était utilisé comme générateur d'un courant d'air en amont d'un dispositif d'injection en forme de Venturi pour y aspirer un matériau à transporter et pour transporter ce matériau pneumatiquement dans une conduite en aval du Venturi.

Une installation combinant un tel ventilateur et un tel injecteur est commercialisée par la firme Silimpianti, division Impianti, sous la dénomination ventilateurs types TRL 20, 40, 55 et injecteurs types TF 20, 40, 55, par exemple.

Le présent appareil, de manière surprenante, ne comprend pas d'injecteur de type Venturi branché en aval du ventilateur, mais au contraire comprend une conduite d'amenée d'un produit à moudre branchée directement sur l'entrée, autrement dit sur la prise d'air centrale d'un tel ventilateur.

De même, la présente installation de cuisson-extrusion, transport et mouture d'un produit alimentaire comprend donc un extrudeur et un appareil selon la présente invention, la conduite d'amenée du produit à moudre étant reliée à un entonnoir prévu au-dessous de la sortie de la filière de l'extrudeuse et un couteau rotatif étant prévu contre la sortie de la filère, au-dessus de l'entonnoir.

L'appareil et l'installation selon la présente invention sont décrits ci-après en référence au dessin annexé dans lequel,
la figure 1 représente une vue schématique de côté d'une forme de réalisation de l'appareil partiellement ouvert,
la figure 2 représente une vue schématique en coupe transversale de la forme de réalisation de l'appareil représenté à la figure 1, et
la figure 3 représente une vue schématique et partielle d'une installation comprenant un extrudeur et un appareil tel que représenté aux figures 1 et 2.

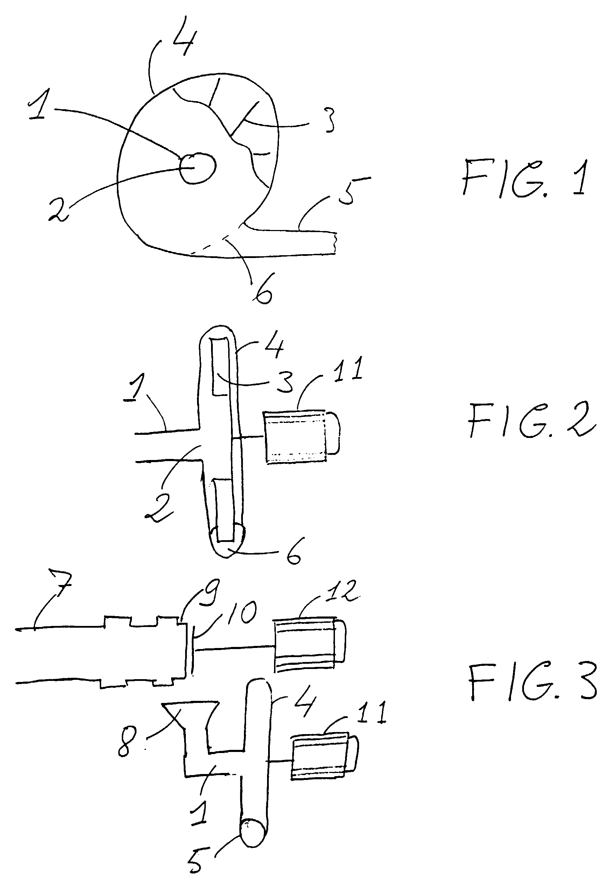

Dans la forme de réalisation représentée aux figures 1 et 2, le présent appareil comprend une conduite d'amenée (1) d'un produit à moudre branchée sur une entrée centrale (2) d'un ventilateur à pales radiales (3) dans un carénage (4) les enveloppant qui présente la forme générale d'un disque creux, et une conduite de transport (5) branchée sur une sortie tangentielle (6) du ventilateur entraîné par un moteur (11).

Dans la forme de réalisation représentée à la figure 3, la présente installation comprend un extrudeur (7), dont seule une partie aval est représentée de profil, et un appareil tel que représenté aux figures 1 et 2, la conduite d'amenée (1) du produit à moudre étant reliée à un entonnoir (8) prévu au-dessous de la sortie de la filière (9) de l'extrudeur et un couteau rotatif (10) entraîné par un moteur 12 étant prévu contre la sortie (9) de la filère, au-dessus de l'entonnoir (8).

Le présent procédé est illustré plus en détails à l'aide des exemples ci-après dans lesquels les pourcentages et parties sont indiqués en poids sauf indications contraires.

### Exemple 1

On prépare un produit alimentaire cuit-extrudé-expansé découpé de type céréale au chocolat, on le moud et on le transporte à l'aide d'une installation telle que représentée à la figure 3, dans laquelle l'extrudeur est un bivis CLEXTRAL type BC-72, le ventilateur est un SILIMPIANTI type TRL 40 et l'extrudeur comprend une filère réalisée sous forme d'une plaque d'acier percée de trois trous circulaires de 4 mm de diamètre.

Pour obtenir le produit cuit-extrudé-expansé, on prépare un mélange comprenant:

| | |
|---|---|
| Farine de riz | 50% |
| Farine de maïs | 23% |
| Sucre | 10% |
| Amidon | 8% |
| Cacao | 6% |
| Sel | 1% |
| Graisse | 2% |

On introduit 360 kg/h de ce mélange dans l'extrudeur où on le cuit-extrude à une température de 120-140°C sous une pression de 90-140 bar durant 20-40 s, les vis tournant à 200-300 révolutions par min.

Le produit expansé découpé à la sortie de l'extrudeur présente la forme de boulette expansées croquantes de 9-12 mm de diamètre et une densité apparente de 110-125 g/l.

On recueille les boulettes dans l'entonnoir et on les conduit dans l'entrée du ventilateur que l'on fait tourner à une puissance de 3 kW. Les boulettes y sont réduites en une poudre qui est transportée pneumatiquement sur une distance de 30 m avant d'être recueillies.

Cette poudre présente une densité apparente de 450-480 g/l et une granulométrie régulière et étroite centrée sur une valeur moyenne de environ 290 um.

### Exemple 2

On prépare un produit alimentaire cuit-extrudé-expansé découpé de type boisson chocolatée, on le moud et on le transporte à l'aide d'une installation semblable à celle utilisée à l'exemple 1.

Pour obtenir le produit cuit-extrudé-expansé, on prépare un mélange comprenant:

| | |
|---|---|
| Farine de blé | 57% |
| Sucre | 25% |
| Cacao | 15% |
| Sel | 1% |
| Graisse | 2% |

On introduit 360 kg/h de ce mélange dans l'extrudeur où on le cuit-extrude à une température de 145-190°C sous une pression de 85-150 bar durant 20-40 s, les vis tournant à 190-310 révolutions par min.

Le produit expansé découpé à la sortie de l'extrudeur présente la forme de boulette expansées croquantes de 9-12 mm de diamètre et une densité apparente de 110-125 g/l.

On recueille les boulettes dans l'entonnoir et on les conduit dans l'entrée du ventilateur que l'on fait tourner à une puissance de 3 kW. Les boulettes y sont réduites en une poudre qui est transportée pneumatiquement sur une distance de 30 m avant d'être recueillies.

Cette poudre présente une densité apparente de 450-480 g/l et une granulométrie régulière et étroite centrée sur une valeur moyenne de environ 300 um.

## Revendications

1. Procédé de mouture et transport d'un produit alimentaire cuit-extrudé-expansé découpé, dans lequel on introduit le produit à moudre dans une entrée d'air centrale d'un ventilateur à pales radiales, on le moud sous l'effet de la rotation des pales dans un carénage les enveloppant qui présente la forme générale d'un disque creux, et l'on propulse la poudre ainsi obtenue dans une conduite de transport branchée sur une sortie tangentielle du ventilateur.

2. Procédé selon la revendication 1, dans lequel le produit cuit-extrudé-expansé découpé à moudre présente une densité apparente de 100-200 g/l.

3. Procédé selon la revendication 1, dans lequel le produit à moudre est obtenu par cuisson-extrusion-expansion d'un mélange à base de farine ou semoule de céréale, notamment de riz, de maïs ou de blé, et découpage du boudin cuit-extrudé-expansé.

4. Procédé selon la revendication 1, dans lequel la poudre obtenue présente une densité apparente de 400-600 g/l.

5. Appareil pour la mise en oeuvre du procédé selon l'une des revendications 1-4, comprenant une conduite d'amenée (1) d'un produit à moudre branchée sur une entrée centrale (2) d'un ventilateur à pales radiales (3) dans un carénage (4) les enveloppant qui présente la forme générale d'un disque creux, et une conduite de transport (5) branchée sur une sortie tangentielle (6) du ventilateur.

6. Installation de cuisson-extrusion, transport et mouture d'un produit alimentaire, comprenant un extrudeur (7) et un appareil selon la revendication 5, la conduite d'amenée (1) du produit à moudre étant reliée à un entonnoir (8) prévu au-dessous de la sortie de la filière (9) de l'extrudeuse et un couteau rotatif (10) étant prévu contre la sortie de la filère, au-dessus de l'entonnoir.
